# EUROPEAN PATENT SPECIFICATION

(11) **EP 3 763 453 B1**
(45) Date of publication and mention of the grant of the patent: **28.08.2024**
(21) Application number: 18908691.1
(22) Date of filing: 09.03.2018
(51) Int. Cl.: B21D 5/04, B21D 43/10, B21D 43/18, B25J 15/00, B25J 15/08, B21D 43/02

(54) **METHOD OF BENDING SHEET MATERIAL USING A CLAMP STRUCTURE**
VERFAHREN ZUM BIEGEN VON WERKSTÜCKE UNTER VERWENDUNG EINER KLEMMSTRUKTUR
PROCÉDÉ DE CINTRAGE DE MATÉRIAU EN FEUILLE UTILISANT UNE STRUCTURE DE SERRAGE

(43) Date of publication of application: 13.01.2021
(73) Proprietor: Kyowa Machine Technology Co., Ltd., Takaoka-shi, Toyama 939-1112 (JP)
(72) Inventor: YOSHIDA Daisuke, Takaoka-shi, Toyama 939-1112 (JP)
(74) Representative: Wunderlich & Heim Patentanwälte PartG mbB
(86) International application number: PCT/JP2018/009112
(87) International publication number: WO 2019/171561

(56) References cited:
- WO-A1-2012/063710
- JP-A- 2000 015 345
- JP-A- 2000 033 590
- JP-A- 2001 269 736
- JP-A- H0 342 135
- JP-A- H09 206 839
- JP-U- H0 666 982
- JP-U- H0 666 982

## Description

### TECHNICAL FIELD

The present invention relates to a bending method for a board material using a clamp structure for a manipulator used in a bending machine.

### BACKGROUND ART

In the field of bending machines for board materials, manipulators formed of C-shaped frames have been used to position and clamp board materials that are workpieces as disclosed in Patent Document 1, for example.

Such manipulators typically have a structure of clamping a board material between an upper clamper and a lower clamper with the board material pinched therebetween and need to have sizes that are large to some extent in terms of holding stability of the upper clamper and the lower clamper and securing of accuracy in setting a rotational position of each workpiece, and in a case of small-sized board materials. There is a problem that it is not possible to bend all four sides of each board material with the board material clamped with the upper clamper and the lower clamper.

JP H06 66 982 U discloses a method according to the preamble of claim 1 for bending of an elongate plate material fed by a robot having a manipulator with several degrees of freedom. The manipulator main gripper is fed by an additional suction gripper which may rotate the elongate workpiece from a stack about 90 degrees for gripping by the main gripper.

JP H03 42135 A discloses processing of a plate like material which is fed to the bending machine linearly.

JP H09 206 839 A discloses the use of a robot gripper having some degree of freedom for feeding sheet pieces to a bending machine.

JP 2000 015345 A shows the use of a manipulator for feeding a workpiece to a bending machine. An intermediate clamping by an additional clamping means is also foreseen.

WO 2012/063710 A1 hints to use a suction gripper hand at a multi axes robot for feeding a workpiece to a bending press. The workpiece may be fed in multiple postures of the robot arm to the bending press.

### RELATED-ART DOCUMENT

### PATENT DOCUMENT

Patent Document 1: JP-A-2000-33590

### SUMMARY OF THE INVENTION

### TECHNICAL PROBLEM

An object of the invention is to provide a clamp structure for a manipulator in a bending method for a board material using the same suitable for bending small-sized board materials.

### SOLUTION TO PROBLEM

A bending method for a board material according to the invention is defined by the features of claim 1.

In this case, if the suction holding unit has the front surface suctioning unit disposed on a front surface side of the suction holding unit or/and a lower surface suctioning unit disposed on a lower surface side of the suction holding unit, it is possible to suction-hold a side portion of one side of the board material bent in the up-down direction with the front surface suctioning unit, and it is possible to suction-hold an upper surface of an edge portion of the board material that has not been bent with the lower surface suctioning unit in a case in which the size of the board material is such a small size that the board material cannot be pinched with the main clamp or in a case in which the board material obtains such a size that the board material cannot be clamped with the main clamp through bending.

### ADVANTAGEOUS EFFECTS OF INVENTION

Since the method according to the invention is provided with an auxiliary unit capable of holding a board material in addition to the main clamp, it is possible to hold a workpiece (board material) in the process of working using the auxiliary unit in a case in which bending of each side of the board material is sequentially performed and a remaining side cannot be bent if the workpiece is clamped with the main clamp, and it is thus possible to bend a small-sized board material as well.

Also, it is possible to cause the suction holding unit to have a compact size that is smaller than the main clamp and thereby to bend board materials with various sizes.

### BRIEF DESCRIPTION OF DRAWINGS

FIG. 1 illustrates a layout example of supplementary equipment of a bending machine in which a manipulator used in the method according to the invention is disposed.
FIG. 2 is a side view of a vicinity of an arm distal end of the manipulator.
FIG. 3 illustrates a state in which a workpiece (board material) is clamped with a main clamp to bend one side of the board material.
FIG. 4 illustrates a state after the one side of the board material is bent.
FIG. 5 illustrates a structure example of a grip changing unit.
FIG. 6 illustrates a state in which a grip changing unit is caused to clamp the board material.
FIG. 7 illustrates a state in which the main clamp has retracted.
FIG. 8 illustrates a state in which an auxiliary unit suction-holds the board material.
FIG. 9 illustrates a state in which the auxiliary unit is caused to hold the board material to bend the remaining one side of the board material.
FIG. 10 illustrates an example not belonging to the present invention in which a lower surface suctioning unit is disposed on a lower surface side of a suction holding unit.

### DESCRIPTION OF EMBODIMENTS

An example of a clamp structure for a manipulator used in the method according to the invention and an example in which board material is bent using the clamp structure will be described below on the basis of drawings.

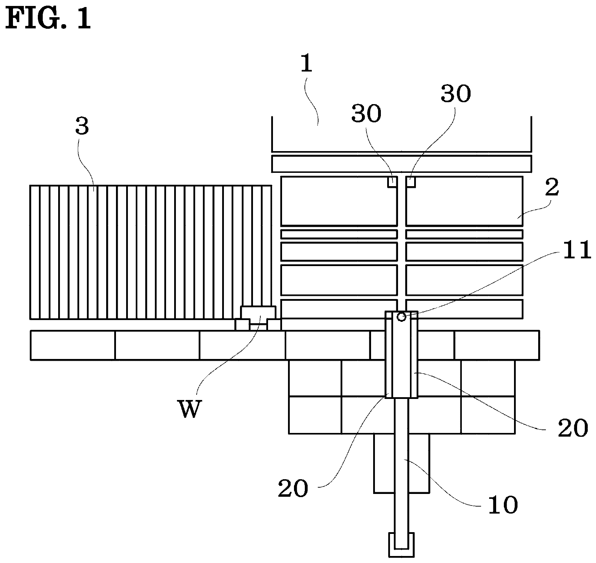

FIG. 1 is a layout diagram.

A front table 2 is placed before the bending machine 1, and a set table 3 for positioning a board material (workpiece) W at an original point and feeding the board material W to the side of the front table is included.

A manipulator 10 is controlled to move forward and backward so as to be able to receive the board material W from the set table 3 and supply the board material W to the bending machine 1.

A grip changing unit 30 is included before the bending machine 1 and at the side of the front table.

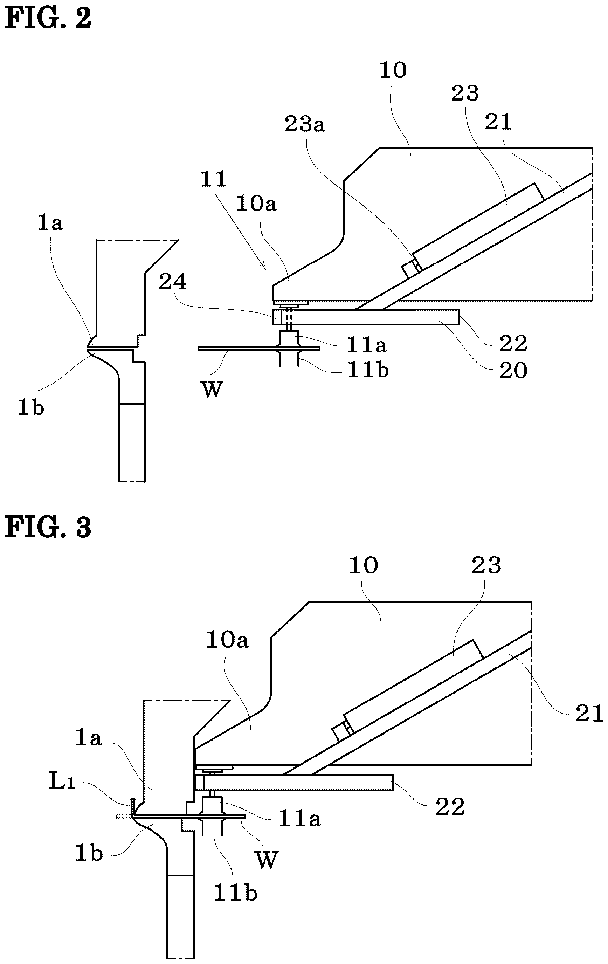

The manipulator includes a main clamp 11 disposed on the distal end side and an auxiliary unit 20 on an arm side surface of the manipulator, and a side view thereof is illustrated in FIG. 2.

As illustrated in FIG. 2, the manipulator 10 has a C-shaped frame structure having an upper arm 10a and a lower arm that is not illustrated in the drawing, in which only a lower clamper 1 1b thereof is illustrated.

The auxiliary unit 20 is attached to the side surface of the upper arm 10a of the manipulator 10, and the auxiliary unit 20 has a sliding frame 21 adapted to slide along a sliding rail, which is not illustrated, and a cylinder 23 that controls the sliding frame 21 to move forward toward obliquely downward and front side and move backward.

A suctioning frame 22 extending in the horizontal direction is coupled to the sliding frame 21, and a distal end portion of the suctioning frame 22 has a suction holding unit 24 formed of a suctioning pad, the suctioning of which is controlled using a vacuum pump.

When a rod 23a of the cylinder 23 moves forward (extends), the sliding frame 21 moves obliquely downward, and accordingly, the suctioning frame 22 moves forward toward the distal end side of the manipulator 10 while being lowered.

Next, an example of a procedure for bending a board material will be described.

As illustrated in FIG. 2, the board material W is clamped between an upper clamper 11a and a lower clamper 1 1b of the main clamp 11 in a state in which the auxiliary unit 20 has been lifted and retracted.

Only a support die 1b for the board material and a press die 1a in the bending machine 1 are schematically illustrated.

As illustrated in FIG. 3, the manipulator 10 moves forward and supplies the board material W to the side of the bending machine 1.

This embodiment is an example in which the upper clamper 11a in the clamp 11 moves upward and downward.

In a state in which the board material W is placed on the support die 1b and the press die 1a has been lowered to press the board material W, bending is performed to form a bent piece Li on one side of the board material using a known blade, which is not illustrated.

Although FIG. 3 illustrates the state in which the bent piece Li has been formed on one side of the board material, it is also possible to successively bend long sides on both sides of the bent piece Li corresponding to a short side by rotating the board material by 90° while clamping the board material with the main clamp 11 if the shape of the board material W is a substantially rectangular shape.

This embodiment will be described using an example in which facing short sides on both ends of a board material with a substantially rectangular shape are bent will be described.

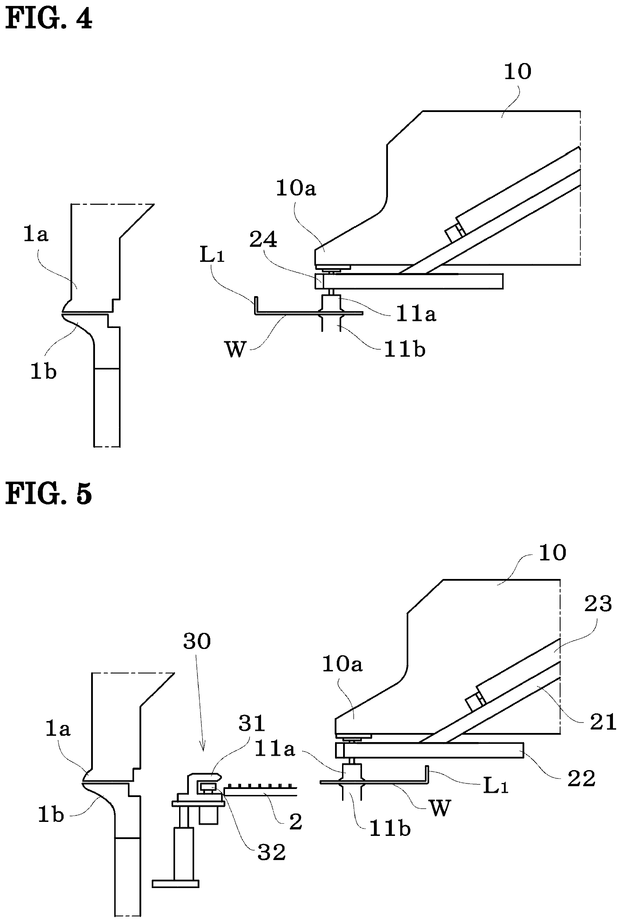

The press die 1a is lifted, the board material W with the bent piece Li is caused to retract while being clamped with the main clamp 11 as illustrated in FIG. 4, and the board material W is flipped as illustrated in FIG. 5.

According to the invention, the grip changing unit 30 is disposed at the side of the front table 2 before the bending machine 1.

The grip changing unit 30 is controlled to be lifted and lowered and can also clamp the board material W using a receiving claw 31 and a gripping clamper 32 adapted to move upward and downward.

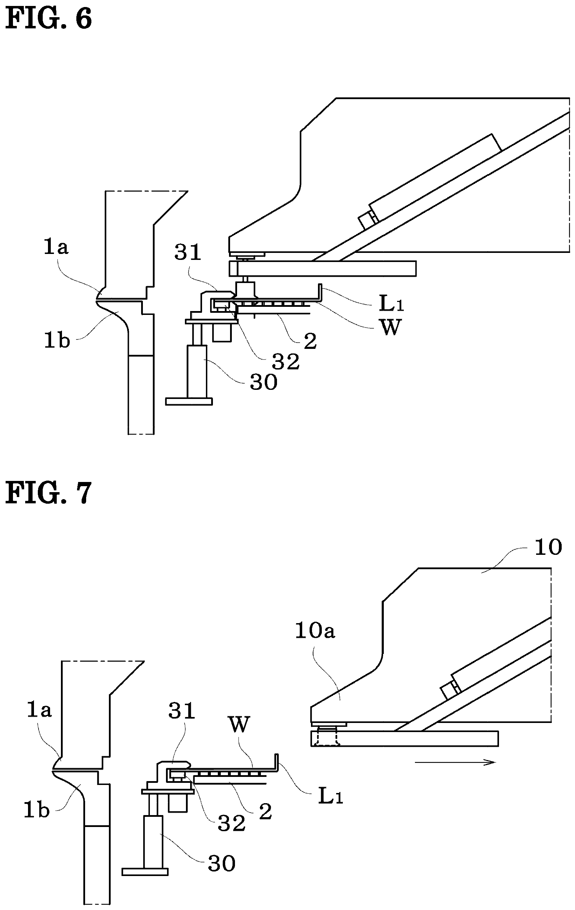

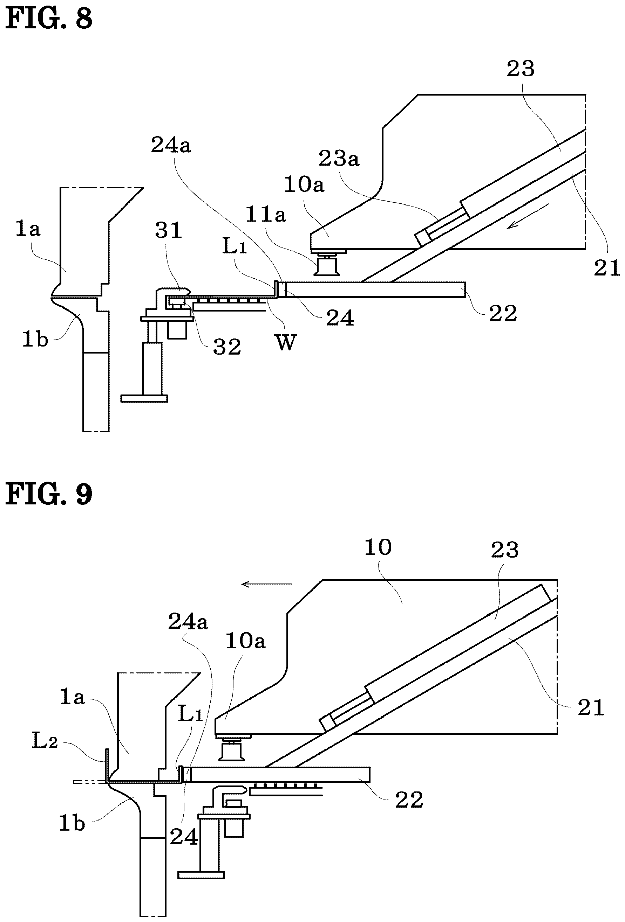

The grip changing unit 30 is caused to clamp one side of the board material W, which has not been bent, on the opposite side of the bent piece Li as illustrated in FIG. 6, the suctioning frame 22 of the auxiliary unit 20 is lowered and moved forward as illustrated in FIGS. 7 and 8, and a front surface suctioning unit 24a disposed on the front surface side of the suction holding unit 24 suction-holds the side surface of the bent piece Li.

In this manner, it is possible to form a bent piece L₂ on the remaining short side of the board material W as illustrated in FIG. 9.

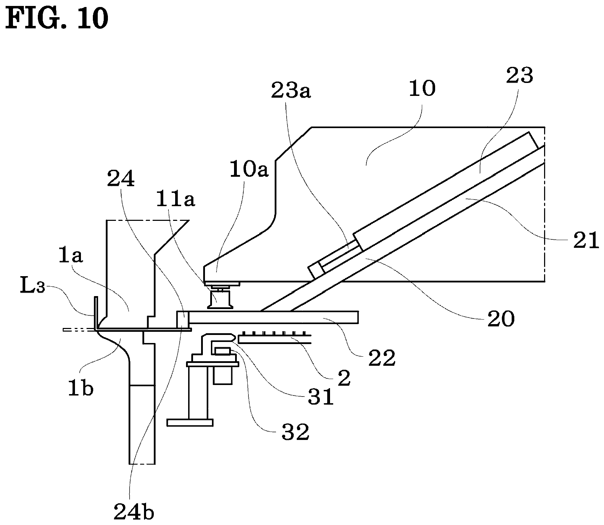

Also, in a method not belonging to the present invention, if a lower surface suctioning unit 24b is disposed on the lower surface side of the suction holding unit 24 that is controlled to move forward and backward as illustrated in FIG. 10, it is possible to suction-hold the upper surface of the edge portion of the workpiece that has not been bent with the lower surface suctioning unit 24b and to bend a piece L₃ on the opposite side.

### INDUSTRIAL APPLICABILITY

Since the method according to the invention includes the auxiliary unit capable of suction-holding a workpiece (board material) in addition to the main clamp, a degree of freedom in sizes of workpieces that can be handled is high, and it is thus possible to use the clamp structure for various machining tools.

### REFERENCE SIGNS LIST

- 1: Bending machine
- 1a: Press die
- 1b: Support die
- 2: Front table
- 3: Set table
- 10: Manipulator
- 10a: Upper arm
- 11: Main clamp
- 11a: Upper clamper
- 11b: Lower clamper
- 20: Auxiliary unit
- 21: Sliding frame
- 22: Suctioning frame
- 23: Cylinder
- 24: Suction holding unit
- 24a: Front surface suctioning unit
- 24b: Lower surface suctioning unit
- 30: Grip changing unit
- 31: Receiving claw
- 32: Gripping clamper

## Claims

1. A bending method for a board material (W) using a clamp structure for a manipulator (10) used in a bending machine (1), the clamp structure comprising:
a main clamp (11) disposed on a distal end side of the manipulator (10); and
an auxiliary unit (20) adapted to hold the board material (W) and controlled to move forward and backward relative to the manipulator (10),
the auxiliary unit (20) having a suction holding unit (24) adapted to suction-hold the board material (W),
**characterized in that**
the method comprises:
preparing a grip changing unit (30) for the board material (W) at a side of a front table (2) disposed before the bending machine (1) for the board material (W),
the main clamp (11) being rotatable relative to the manipulator (10) in a horizontal plane,
the suction holding unit (24) being controlled to move forward from a side portion toward a distal end side of an arm (10a) of the manipulator (10) and backward relative to the manipulator (10) and the suction holding unit (24) having a front surface suctioning unit (24a) disposed on a front surface side of the suction holding unit (24);
clamp-holding the board material (W) with the main clamp (11) of the manipulator (10) and bending an end portion (L1) other than at least one side (L2) of the board material (W) using the bending machine (1);
rotating the main clamp (11) by 180 degrees relative to the manipulator (10),
causing the grip changing unit (30) to clamp the one side (L2) of the board material (W) that has not been bent and unclamping the main clamp (11);
passing the board material (W) that has been clamped with the grip changing unit (30) to the auxiliary unit (20) by suction holding the bent end portion (L1) with the front surface suctioning unit (24a) and causing the auxiliary unit (20) to hold the board material (W); and
bending the one side (L2) of the board material (W) that has not been bent while holding the bent end portion (L1) of the board material (W) with the auxiliary unit (20).

## Patentansprüche

1. Biegeverfahren für ein Plattenmaterial (W) unter Verwendung einer Klemmvorrichtung für einen in einer Biegemaschine (1) verwendeten Manipulator (10), wobei die Klemmvorrichtung umfasst:
- eine Hauptklemme (11), welche an einer entfernten Endseite des Manipulators (10) angeordnet ist; und
- eine Hilfseinheit (20), welche ausgebildet ist, das Plattenmaterial (W) zu halten und gesteuert ist, sich relativ zu dem Manipulator (10) vorwärts und rückwärts zu bewegen, wobei die Hilfseinheit (20) eine Saughalteeinheit (24) aufweist, welche zum Saughalten des Plattenmaterials (W) ausgebildet ist;
**dadurch gekennzeichnet,**
**dass** das Verfahren umfasst:
- Vorbereiten einer Greiferwechseleinheit (30) für das Plattenmaterial (W) an einer Seite des Vordertisches (2), welcher vor der Biegemaschine (1) für das Plattenmaterial (W) angeordnet ist;
- wobei die Hauptklemme (11) relativ zu dem Manipulator (10) in einer horizontalen Ebene drehbar ist;
- wobei die Saughalteeinheit (24) gesteuert wird, sich vorwärts von einem Seitenabschnitt hin zu einer entfernten Endseite eines Arms (10a) des Manipulators (10) und rückwärts relativ zu dem Manipulator (10) zu bewegen und die Saughalteeinheit (24) eine Frontflächensaugeinheit (24a) aufweist, welche an einer Frontflächenseite der Saughalteeinheit (24), angeordnet ist;
- klemmendes Halten des Plattenmaterials (W) mit der Hauptklemme (11) des Manipulators (10) und Biegen eines Endabschnitts (L1), welche anderseitig zu der zumindest einen Seite (L2) des Plattenmaterials (W) ist, unter Verwendung der Biegemaschine (1);
- Drehen der Hauptklemme (11) um 180 Grad relativ zu dem Manipulator (10),
- Veranlassen der Greiferwechseleinheit (30) zum Klemmen der einen Seite (L2) des Plattenmaterials (W), welche noch nicht gebogen wurde, und zum Entklemmen der Hauptklemme (11);
- Weiterleiten des Plattenmaterials (W), welches mit der Greiferwechseleinheit (30) gegriffen ist, an die Hilfseinheit (20) durch Saughalten des gebogenen Endabschnittes (L1) mit der Vorderflächensaugeinheit (24a) und Veranlassen der Hilfseinheit (20) zum Halten des Plattenmaterials (W); und
- Biegen der einen Seite (L2) des Plattenmaterials (W), die nicht gebogen wurde, während der gebogene Endabschnitt (L1) des Plattenmaterials (W) mit der Hilfseinheit (20) gehalten wird.

## Revendications

1. Procédé de flexion pour un matériau de planche (W) au moyen d'une structure de serrage pour un manipulateur (10) utilisé dans une machine de flexion (1),
la structure de serrage comprenant :
une pince principale (11) disposée sur un côté d'extrémité distale du manipulateur (10) ; et
une unité auxiliaire (20) adaptée pour maintenir le matériau de planche (W) et commandée pour se déplacer vers l'avant et vers l'arrière par rapport au manipulateur (10),
l'unité auxiliaire (20) présentant une unité de maintien par aspiration (24) adaptée pour maintenir par aspiration le matériau de planche (W),
**caractérisé en ce que**
le procédé comprend :
la préparation d'une unité de changement de prise (30) pour le matériau de planche (W) au niveau d'un côté d'une table avant (2) disposée devant la machine de flexion (1) pour le matériau de planche (W),
la pince principale (11) pouvant être amenée en rotation par rapport au manipulateur (10) dans un plan horizontal,
l'unité de maintien par aspiration (24) étant commandée pour se déplacer vers l'avant à partir d'une partie latérale vers un côté d'extrémité distale d'un bras (10a) du manipulateur (10) et vers l'arrière par rapport au manipulateur (10) et l'unité de maintien par aspiration (24) présentant une unité d'aspiration de surface avant (24a) disposée sur un côté de surface avant de l'unité de maintien par aspiration (24) ;
le maintien par serrage du matériau de planche (W) avec la pince principale (11) du manipulateur (10) et la flexion d'une partie d'extrémité (L1) autre qu'au moins un côté (L2) du matériau de planche (W) au moyen de la machine de flexion (1) ;
la mise en rotation de la pince principale (11) de 180 degrés par rapport au manipulateur (10),
l'amenée de l'unité de changement de prise (30) à serrer l'un côté (L2) du matériau de planche (W) qui n'a pas été fléchi et le desserrage de la pince principale (11) ;
le passage du matériau de planche (W) qui a été serré avec l'unité de changement de prise (30) vers l'unité auxiliaire (20) par maintien par aspiration de la partie d'extrémité (L1) fléchie avec l'unité d'aspiration de surface avant (24a) et l'amenée de l'unité auxiliaire (20) à maintenir le matériau de planche (W) ; et
la flexion de l'un côté (L2) du matériau de planche (W) qui n'a pas été fléchi pendant le maintien de la partie d'extrémité (L1) fléchie du matériau de planche (W) avec l'unité auxiliaire (20).
